# EUROPÄISCHE PATENTANMELDUNG

(11) **EP 4 806 785 A1**
(43) Veröffentlichungstag der Anmeldung: **16.09.2026**
(21) Anmeldenummer: 26163063.6
(22) Anmeldetag: 06.03.2026
(51) Int. Cl.: B64D 11/00

(54) **STAUFACHANORDNUNG FÜR EIN FLUGZEUG, WECHSELSATZ MIT DER STAUFACHANORDNUNG, VERFAHREN ZUM WECHSELN EINER INNENLAGE SOWIE FLUGZEUG MIT DER STAUFACHANORDNUNG**

(30) Priorität: 11.03.2025 DE 102025109183
(71) Anmelder: Diehl Aviation Laupheim GmbH, 88471 Laupheim (DE)
(72) Erfinder: Steinmayer, Marc, 88400 Biberach an der Riss (DE); Sießegger, Daniel, 88480 Achstetten (DE)
(74) Vertreter: Diehl Patentabteilung

(57) **Zusammenfassung**

Es wird eine Staufachanordnung (1) für ein Passagierflugzeug, mit einem Staufach (2) zur Aufnahme von Staugut, welches in einer bestimmungsgemäßen Einbaulage über mindestens eine mechanische Schnittstelle (3a, 3b) zumindest mittelbar an einer Flugzeugstruktur befestigbar ist, wobei das Staufach (2) zwei seitliche Wandabschnitte (4a, 4b) zur seitlichen Begrenzung des Staufachs (2), einen unteren Wandabschnitt (5) zur unteren Begrenzung des Staufachs (2), einen oberen Wandabschnitt (6) zur oberen Begrenzung des Staufachs (2) sowie einen hinteren Wandabschnitt (7) zur rückseitigen Begrenzung des Staufachs (2) aufweist, wobei zumindest der untere, der obere sowie die seitlichen Wandabschnitte (4a, 4b, 5, 6) zusammen eine Aufnahmeöffnung (9) für das Staugut umschließen, vorgeschlagen, wobei eine wechselbare Innenlage (11) zur Bildung einer sichtbaren Innenfläche (12) des Staufachs (2), wobei die Innenlage (11) zumindest den unteren Wandabschnitt (5) mindestens größtenteils abdeckt und lösbar in dem Staufach (2) befestigt ist.

## Beschreibung

Die Erfindung betrifft eine Staufachanordnung für ein Flugzeug mit den Merkmalen des Oberbegriffs des Anspruchs 1. Weiterhin betrifft die Erfindung einen Wechselsatz mit der Staufachanordnung, ein Verfahren zum Wechseln einer Innenlage des Wechselsatzes sowie ein Flugzeug mit der Staufachanordnung und/oder dem Wechselsatz.

Es sind Gepäckfächer für Flugzeuge bekannt, welche in einem Überkopfbereich einer Passagierkabine von Flugzeugen angeordnet sind und zur Aufnahme von Gepäckstücken dienen. Derartige Gepäckfächer weisen in der Regel eine absenkbare Schütte zur Aufnahme der Gepäckstücke auf, welche zur Öffnung und Beladung aus einem Gehäuse herausgeschwenkt und durch ein Zurückschwenken der Schütte in das Gehäuse geschlossen werden, wodurch die Gepäckstücke während des Fluges darin sicher verstaut sind. Zudem sind auch fest installierte Staufächer zur Aufnahme der Gepäckstücke bekannt, welche durch eine Klappe geöffnet und geschlossen werden können. Beim Be- und Entladen der Schütte bzw. des Staufachs kann es hierbei zu einer Abnutzung und/oder Beschädigung der Innenflächen kommen.

Beispielsweise offenbart die Druckschrift DE 10 2011 118 548 A1 ein Gepäckablagefach für ein Flugzeug, wobei das Gepäckablagefach ein Gehäuse und einen Gepäckbehälter umfasst, wobei der Gepäckbehälter in dem Gehäuse um eine Schwenkachse schwenkbar gelagert ist, wobei die Schwenkachse in ihrer gedachten Längserstreckung eine Behälterseitenwand des Gepäckbehälters und/oder eine Gehäuseseitenwand des Gehäuses schneidet, wobei der Gepäckbehälter bei einer ersten Schwenkbewegung von einer Schließstellung in eine Öffnungsstellung überführbar ist und das Gepäckablagefach geöffnet wird und wobei der Gepäckbehälter bei einer zweiten Schwenkbewegung von der Öffnungsstellung in die Schließstellung überführbar ist und das Gepäckablagefach geschlossen wird.

Der Erfindung liegt die Aufgabe zugrunde, eine individuell gestaltbare sowie robuste Staufachanordnung vorzuschlagen. Diese Aufgabe wird durch eine Staufachanordnung mit den Merkmalen des Anspruchs 1, einen Wechselsatz mit den Merkmalen des Anspruchs 13, ein Verfahren mit den Merkmalen des Anspruchs 14 sowie ein Flugzeug mit den Merkmalen des Anspruchs 15 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Staufachanordnung, welche für ein Flugzeug, insbesondere ein Passagierflugzeug, ausgebildet und/oder geeignet ist. Insbesondere ist die Staufachanordnung in einem Überkopfbereich einer Flugzeugkabine, vorzugsweise einer Passagierkabine, des Flugzeugs angeordnet und/oder anordenbar. Bevorzugt ist das Staufach als ein Überkopf-Gepäckfach, auch als sogenanntes "OHSC" (Overhead Stowage Compartment) bekannt, ausgebildet.

Die Staufachanordnung weist ein Staufach auf, welches zur Aufnahme von Staugut, insbesondere Gepäckstücke, ausgebildet und/oder geeignet ist, wobei das Staufach in einer bestimmungsgemäßen Einbaulage über mindestens oder genau eine mechanische Schnittstelle zumindest mittelbar an einer Flugzeugstruktur befestigt und/oder befestigbar ist. Insbesondere ist das Staufach in der bestimmungsgemäßen Einbaulage innerhalb der Flugzeugkabine in dem Überkopfbereich angeordnet. Vorzugsweise weist die Staufachanordnung ein Staufachgehäuse auf, welches über die mindestens eine mechanische Schnittstelle, insbesondere unmittelbar, an der Flugzeugstruktur befestigt und/oder befestigbar ist. Das Staufach ist hierbei vorzugsweise als eine Schütte, im Speziellen als ein sogenannter "Pivot-Bin", ausgebildet, welche über die mindestens eine mechanische Schnittstelle, insbesondere ein Schwenkgelenk, um eine Schwenkachse zwischen einer Offenstellung und einer Schließstellung in dem Staufachgehäuse schwenkbar gelagert ist. Alternativ kann das Staufach selbst das Staufachgehäuse bilden, welches über die mindestens eine mechanische Schnittstelle, insbesondere unmittelbar, an der Flugzeugstruktur befestigbar ist. Die Staufachanordnung weist hierbei vorzugsweise eine Klappe auf, welche über mindestens ein Scharnier um eine Schwenkachse schwenkbar zwischen einer Offenstellung und einer Schließstellung an dem Staufachgehäuse schwenkbar gelagert ist.

Das Staufach weist zwei seitliche Wandabschnitte zur seitlichen Begrenzung des Staufachs, einen unteren Wandabschnitt zur unteren Begrenzung des Staufachs, einen oberen Wandabschnitt zur oberen Begrenzung des Staufachs sowie einen hinteren Wandabschnitt zur rückseitigen Begrenzung des Staufachs auf, wobei der untere, der obere sowie die seitlichen Wandabschnitte zusammen eine Aufnahmeöffnung für das Staugut umschließen. Mit anderen Worten definieren die Wandabschnitte gemeinsam einen Stauraum für das Staugut, wobei das Staugut über die Aufnahmeöffnung in den Stauraum beladen bzw. aus dem Stauraum entladen werden kann. Hierbei ist die Aufnahmeöffnung in der Offenstellung, vorzugsweise zur Beladung mit dem Staugut freigegeben und in der Schließstellung geschlossen. Insbesondere bildet der untere Wandabschnitt des als Schwenkfach ausgebildeten Staufachs, insbesondere in der Schließstellung, eine Front der Staufachanordnung. Alternativ hierzu bildet der untere Wandabschnitt des als Staufachgehäuses ausgebildeten Staufachs einen Boden der Staufachanordnung.

Das Staufach kann als ein Sandwichbauteil ausgebildet sein. Vorzugsweise weist ein solches sandwichartig ausgebildetes Bauteil eine erste Deckschicht und eine zweite Deckschicht sowie eine Kernschicht auf, wobei diese Kernschicht im Wesentlichen zwischen der ersten und der zweiten Deckschicht angeordnet ist. Optional können ein, mehrere oder alle Wandabschnitte eine Deckfolie umfassen. Vorzugsweise umfasst zumindest eine Sichtseite die Deckfolie und/oder die Sichtseite ist durch die Deckfolie gebildet. Beispielsweise ist die Deckfolie als eine Polyvinylfluorid-Folie ausgebildet. Die Polyvinylfluorid-Folie ist insbesondere als eine farbige, vorzugsweise weiße, oder transparente Folie, im Speziellen als eine sogenannte Tedlar-Folie ausgebildet. Beispielsweise wird die Deckfolie direkt beim Sandwich-Herstellungsprozess der jeweiligen Wandabschnitte bzw. des Staufachs dauerhaft mit der Sandwichstruktur bzw. der jeweiligen Deckschicht verbunden, insbesondere über Harzkomponenten in der entsprechenden Deckschicht verklebt.

Im Rahmen der Erfindung wird vorgeschlagen, dass die Staufachanordnung eine wechselbare Innenlage aufweist, welche zur Bildung einer sichtbaren Innenfläche des Staufachs ausgebildet und/oder geeignet ist. Die Innenlage deckt hierbei zumindest den unteren Wandabschnitt mindestens größtenteils ab und ist lösbar in dem Staufach befestigt. Insbesondere ist unter einer wechselbaren Innenlage eine separat zu dem Staufach ausgebildete und/oder speziell auf das Staufach angepasste Einlage zu verstehen, welche austauschbar ist. Vereinfacht dargestellt, kann die Innenlage in das Staufach eingelegt werden, um eine Oberfläche des Staufachs zumindest teilweise abzudecken. Insbesondere ist "sichtbar" in Bezug auf die Innenfläche dahingehend zu verstehen, dass die Innenfläche in der Offenstellung von außen durch die Aufnahmeöffnung sichtbar bzw. betrachtbar ist. Vorzugsweise ist "mindestens größtenteils" dahingehend zu verstehen, dass die Innenlage den unteren Wandabschnitt zu mindestens 80%, vorzugsweise zu mindestens 90%, im Speziellen zu mindestens 95% abdeckt. Beispielweise deckt die Innenlage den Wandabschnitt teilweise ab, wobei zumindest zu den seitlichen Wandabschnitten ein Abstand bzw. ein nicht abgedeckter Bereich gebildet ist. Alternativ kann die Innenlage den Wandabschnitt jedoch auch vollständig abdecken. Insbesondere ist "lösbar befestigt" dahingehend zu verstehen, dass die Innenlage in dem Staufach in einer Endlage fixiert ist und zu Austauschzwecken aus dem Staufach entfernt werden kann. Die Innenlage kann hierbei formschlüssig und/oder kraftschlüssig und/oder stoffschlüssig zumindest an dem unteren Wandabschnitt und optional an mindestens einem weiteren Wandabschnitt, insbesondere dem hinteren und/oder oberen Wandabschnitt, befestigt sein. Unter einer formschlüssigen und/oder kraftschlüssigen Verbindung wird vorzugsweise eine mechanische Verbindung verstanden, welche durch Krafteinwirkung, insbesondere werkzeuglos oder mithilfe eines Werkzeugs, gelöst werden kann. Beispielhaft seien hier, Steck-, Klipps- und/oder Schraubverbindungen, genannt. Unter einer stoffschlüssigen Verbindung ist hingegen eine adhäsive Verbindung zu verstehen, welche thermisch und/oder chemisch lösbar ist. Beispielhaft seien hier, Klebeverbindungen, genannt.

Der Erfindung liegt die Erkenntnis zugrunde, dass die Innenflächen von Gepäckfächern aufgrund der starken Beanspruchung im Betrieb, insbesondere beim Be- und Entladen des Stauguts, bereits nach kurzer Zeit erhebliche optische Beeinträchtigungen, wie Kratzer, Verfärbungen, Abrieb oder dergleichen aufweisen können. Zum Teil können durch starke Stoßbelastungen der Gepäckstücke auch Dellen und sonstige strukturelle Beschädigungen an den Wandabschnitten, insbesondere in der Sandwichstruktur des unteren Wandabschnittes, entstehen. Je nach Airline und Beanspruchung müssen daher einzelne oder auch alle Staufächer ausgetauscht werden, was mit sehr hohen Kosten verbunden ist.

Der Vorteil der Erfindung besteht darin, dass durch die wechselbare Innenlage das optische Erscheinungsbild des Stauraums nach Bedarf in einfacher Weise aufgewertet und/oder erneuert werden kann, wodurch ein kostengünstiges Refurbishing ermöglicht wird. Durch das Auswechseln der Innenlage kann zudem in einfacher und kostengünstiger Weise die Innenfläche angepasst werden, wodurch eine individuelle Gestaltung des Stauraums möglich ist. Somit kann die sichtbare Innenfläche der Innenlage beispielsweise kundenspezifisch gestaltet, z.B. bedruckt, werden. Ein weiterer Vorteil besteht darin, dass die Oberfläche des Staufachs in dem Stauraum, insbesondere die Sandwichstruktur, im Speziellen die Dekorlage, dauerhaft vor Abnutzung und/oder Beschädigungen geschützt wird, wodurch eine besonders robuste Staufachanordnung vorgeschlagen wird.

In einer Weiterbildung ist vorgesehen, dass die Innenlage zusätzlich den hinteren Wandabschnitt und/oder den oberen Wandabschnitt zumindest abschnittsweise abdeckt. Besonders bevorzugt ist vorgesehen, dass die Innenlage den jeweiligen Wandabschnitt über die gesamte Breite des Staufachs, insbesondere des Stauraums, mindestens größtenteils abdeckt. Hierbei ist die Breite des Staufachs durch den inneren Abstand der beiden seitlichen Wandabschnitte bzw. der Aufnahmeöffnung, insbesondere in axialer Richtung bezüglich der Längsachse, zu verstehen. Insbesondere ist "zumindest abschnittsweise" dahingehend zu verstehen, dass die Innenlage den hinteren Wandabschnitt und/oder den oberen Wandabschnitt zu weniger als 80%, vorzugsweise weniger als 50%, im Speziellen weniger als 20% abdeckt. Alternativ ist vorgesehen, dass die Innenlage den hinteren Wandabschnitt und/oder den oberen Wandabschnitt mindestens größtenteils und/oder vollständig abdeckt. Besonders bevorzugt ist vorgesehen, dass die Innenlage an dem jeweiligen Wandabschnitt flächig, vorzugsweise vollflächig, anliegt. Durch die zumindest teilweise Abdeckung des hinteren Wandabschnittes und/oder des oberen Wandabschnittes können diese zusätzlich durch die Innenlage geschützt werden.

In einer konkreten Ausgestaltung ist vorgesehen, dass die Staufachanordnung mindestens oder genau eine Fixierleiste aufweist, welche zur Befestigung der Innenlage in dem Staufach ausgebildet und/oder geeignet ist. Die Fixierleiste ist hierbei ausgebildet, einen Endabschnitt der Innenlage über die gesamte Breite der Innenlage mindestens größtenteils zu fixieren. Mit anderen Worten ist die Innenlage dadurch in dem Staufach befestigt, indem die mindestens eine Fixierleiste den Endabschnitt der Innenlage fixiert. Vorzugsweise ist die Innenlage über die mindestens eine Fixierleiste derart in dem Staufach fixiert, dass die Innenlage beim Be- und Entladen des Stauguts über die Aufnahmeöffnung gegen ein Verrutschen und/oder Verschieben in der Endlage gesichert ist. Besonders bevorzugt ist die Fixierleiste lösbar in dem Staufach montiert. Insbesondere ist die Fixierleiste ausgebildet den Endabschnitt formschlüssig und/oder kraftschlüssig in dem Staufach, vorzugsweise zumindest an dem unteren Wandabschnitt, zu fixieren. Beispielsweise ist die Fixierleiste als eine Klemmleiste ausgebildet, welche den Endabschnitt über die gesamte Breite zumindest abschnittsweise mit einer Klemmkraft beaufschlagt und/oder klemmend fixiert. Insbesondere ist "mindestens größtenteils" dahingehend zu verstehen, dass die Fixierleiste den Endabschnitt zu mehr als 80 %, vorzugsweise mehr als 90 %, im Speziellen zu mehr als 95 % der gesamten Breite der Innenlage fixiert. Alternativ kann jedoch auch vorgesehen sein, dass die Fixierleiste den Endabschnitt über die gesamte Breite fixiert. Insbesondere erstreckt sich die Fixierleiste hierzu über die gesamte Breite des Stauraums, vorzugsweise zwischen den beiden seitlichen Wandabschnitten, und/oder der Innenlage. Es wird somit eine Staufachanordnung vorgeschlagen, welche eine besonders einfache und sichere Befestigung der Innenlage in dem Staufach ermöglicht.

In einer Konkretisierung ist vorgesehen, dass das Staufach an einer Vorderseite des unteren Wandabschnittes eine Beladekante aufweist, wobei die Fixierleiste an der Beladekante angeordnet ist, um den Endabschnitt an dem unteren Wandabschnitt zu fixieren.

Die Beladekante, auch als "Bin Lip" bekannt, dient zur Sicherung des Stauguts in der Offenstellung der Schütte bzw. der Klappe und/oder als Handgriff zum Öffnen oder Schließen der Schütte. Insbesondere erstreckt sich die Beladekante über die gesamte Breite der Aufnahmeöffnung, vorzugsweise zwischen den beiden seitlichen Wandabschnitten. Vorzugsweise erstreckt sich die Fixierleiste entlang der Beladekante und/oder über die gesamte Breite der Beladekante. Die Fixierleiste kann wahlweise an der Beladekante angeordnet und/oder befestigt sein. Vorzugweise ist der Endabschnitt als ein der Beladekante zugewandtes Ende der Innenlage zu verstehen, welches an der Beladekante anliegt und/oder über die Fixierleiste an der Beladekante fixiert ist. Insbesondere ist der Endabschnitt der Innenlage von oben durch die Fixierleiste fixiert und liegt optional an seiner Vorderseite, insbesondere mit einer Schnittkante, an der Beladekante an. Durch die Anordnung der Fixierleiste an der Beladekante kann ein spaltfreier Übergang von der Innenlage zu der Beladekante erfolgen, sodass im Bereich der Beladekante eine Abdeckung der Oberfläche des unteren Wandabschnittes durch die Innenlage sichergestellt ist. Dadurch wird gewährleistet, dass vor allem im Bereich der Beladekante, wo es zu einer hohen Abnutzung beim Be- und Entladen des Stauguts kommen kann, eine schützende Abdeckung durch die Innenlage sichergestellt wird.

In einer weiteren Konkretisierung ist vorgesehen, dass die Beladekante durch eine an dem unteren Wandabschnitt aufgesetzte Profilschiene gebildet ist, wobei die Profilschiene einen nach innen gerichteten und an dem unteren Wandabschnitt anliegenden Anlageabschnitt aufweist, an welchem die Fixierleiste integriert oder aufgesetzt ist. Die Profilschiene ist vorzugsweise mit dem unteren Wandabschnitt formschlüssig und/oder stoffschlüssig und/oder kraftschlüssig, vorzugsweise über ein oder mehrere Befestigungsmittel, verbunden. Insbesondere weist die Profilschiene einen Profilabschnitt zur Bildung der Beladekante auf, wobei sich der Anlageabschnitt unmittelbar an den Profilabschnitt anschließt. Bevorzugt weist die Profilschiene über die gesamte Längserstreckung ein konstantes Querschnittsprofil auf und/oder ein stranggepresstes Hohlprofil auf. Der Profilabschnitt kann hierbei einen versteifenden, vorzugsweise einen rechteckigen oder trapezförmigen Querschnitt und der Anlageabschnitt einen flachen und/oder ebenen Querschnitt aufweisen. Besonders bevorzugt bilden der Profilabschnitt und der Anlageabschnitt gemeinsam eine ebene Anlagefläche, über welche die Profilschiene flächig, vorzugsweise vollflächig an dem unteren Wandabschnitt anliegt. Optional ergänzend umgreift die Profilschiene, insbesondere der Profilabschnitt, eine Vorderkante des unteren Wandabschnittes. Bei einer integrierten Fixierleiste bildet die Fixierleiste einen integralen Bestandteil der Profilschiene. Die integrierte Fixierleiste kann hierzu an dem Anlageabschnitt als ein Klemmprofil ausgebildet sein, über welches die Innenlage an der Oberfläche des Wandabschnitts bei einer Montage der Profilschiene klemmend fixiert werden kann. Hierzu ist die Profilschiene vorzugsweise lösbar, insbesondere über das mindestens eine Befestigungsmittel, vorzugsweise eine Befestigungsschraube, an dem unteren Wandabschnitt montiert und/oder montierbar. Bei einer aufgesetzten Fixierleiste bildet die Fixierleiste ein separates Bauteil zur der Profilschiene. Die aufgesetzte Fixierleiste kann als eine an dem Anlageabschnitt lösbar befestigte Klemmleiste ausgebildet sein, über welche die Innenlage an der Oberfläche des Wandabschnitts bei einer Montage der Fixierleiste klemmend fixiert werden kann. Die Fixierleiste kann vorzugsweise über die Befestigungsmittel der Profilschiene an dem Anlageabschnitt montiert sein. Es kann somit in einfacher Weise eine vorhandene Profilschiene derart modifiziert werden, dass diese zur Fixierung der Innenlage an dem unteren Wandabschnitt geeignet ist. Dies hat den Vorteil das bereits vorhandene Staufächer mit einer entsprechenden Profilschiene nachgerüstet werden können, indem die Fixierleiste an der bestehenden Profilschiene aufgesetzt oder die Profilschiene mit der integrierten Fixierleiste nachgerüstet wird.

In einer weiteren Konkretisierung ist vorgesehen, dass die Staufachanordnung eine weitere Fixierleiste aufweist, welche zur Befestigung der Innenlage in dem Staufach ausgebildet und/oder geeignet ist. Die weitere Fixierleiste ist hierbei ausgebildet, einen dem Endabschnitt gegenüberliegenden weiteren Endabschnitt der Innenlage über die gesamte Breite der Innenlage mindestens größtenteils zu fixieren. Mit anderen Worten ist die Innenlage dadurch in dem Staufach befestigt, indem die Fixierleiste und die weitere Fixierleiste die beiden gegenüberliegenden Endabschnitte der Innenlage fixieren. Vorzugsweise ist die Innenlage zwischen den beiden Fixierleisten verspannt und/oder gespannt angeordnet. Prinzipiell kann die weitere Fixierleiste lösbar in dem Staufach montiert sein. Alternativ kann die weitere Fixierleiste jedoch auch dauerhaft und/oder unlösbar in dem Staufach montiert sein. Prinzipiell ist die weitere Fixierleiste ausgebildet, den weiteren Endabschnitt zumindest formschlüssig an dem entsprechenden Wandabschnitt zu fixieren. Optional kann die weitere Fixierleiste ausgebildet, den weiteren Endabschnitt kraftschlüssig in dem Staufach, vorzugsweise an dem zugehörigen Wandabschnitt, zu fixieren. Beispielsweise ist die weitere Fixierleiste als eine Profilleiste ausgebildet, welche den weiteren Endabschnitt über die gesamte Breite aufnimmt und/oder in welche der weitere Endabschnitt einsteckbar und/oder einschiebbar ist. Alternativ ist die weitere Fixierleiste als eine weitere Klemmleiste ausgebildet, welche den weiteren Endabschnitt mit einer weiteren Klemmkraft beaufschlagt und/oder klemmend fixiert. Insbesondere ist "mindestens größtenteils" dahingehend zu verstehen, dass die weitere Fixierleiste den weiteren Endabschnitt zu mehr als 80 %, vorzugsweise mehr als 90 %, im Speziellen zu mehr als 95 % der gesamten Breite der Innenlage fixiert. Alternativ kann jedoch auch vorgesehen sein, dass die weitere Fixierleiste den weiteren Endabschnitt über die gesamte Breite fixiert. Insbesondere erstreckt sich die weitere Fixierleiste über die gesamte Breite des Stauraums, vorzugsweise zwischen den beiden seitlichen Wandabschnitten.

Es wird somit eine Staufachanordnung vorgeschlagen, welche besonders sichere und rutschfeste Befestigung der Innenlage in dem Staufach ermöglicht.

In einer weiteren Konkretisierung ist vorgesehen, dass die weitere Fixierleiste an einer Vorderkante des oberen Wandabschnitts angeordnet ist, um den weiteren Endabschnitt an dem oberen Wandabschnitt zu fixieren. Hierbei deckt die Innenlage den unteren Wandabschnitt, den hinteren Wandabschnitt und den oberen Wandabschnitt vollständig oder mindestens größtenteils ab. Prinzipiell kann die weitere Fixierleiste auf die Oberfläche des oberen Wandabschnitts aufgesetzt und/oder montiert sein. Hierzu kann die weitere Fixierleiste stoffschlüssig, vorzugsweise über eine Klebeverbindung, dauerhaft oder kraftschlüssig, vorzugsweise über das mindestens eine weitere Befestigungsmittel, lösbar an dem oberen Wandabschnitt befestigt sein. Alternativ oder optional ergänzend umgreift die weitere Fixierleiste die Vorderkante des oberen Wandabschnitts formschlüssig und/oder kraftschlüssig. Hierzu weist die Fixierleiste einen Aufnahmeabschnitt auf, in welchem der obere Wandabschnitt abschnittsweise aufgenommen ist. Dadurch wird der Stauraum vollständig, bis auf die seitlichen Wandabschnitte, mit der Innenlage ausgekleidet, wodurch ein besonders hoher Schutz der betreffenden Wandabschnitte gewährleistet wird.

Alternativ ist die weitere Fixierleiste an dem hinteren Wandabschnitt angeordnet, um den weiteren Endabschnitt an dem hinteren Wandabschnitt zu fixieren. Hierbei deckt die Innenlage den unteren Wandabschnitt vollständig oder mindestens größtenteils und den hinteren Wandabschnitt zumindest abschnittsweise oder mindestens größtenteils oder vollständig ab. Mit anderen Worten deckt die Innenlage den hinteren Wandabschnitt bis zu der weiteren Fixierleiste vollständig oder mindestens größtenteils ab, wobei der hintere Wandabschnitt und/oder der obere Wandabschnitt oberhalb der Fixierleiste frei von der Innenlage sind. Prinzipiell bilden der untere Wandabschnitt, der hintere Wandabschnitt und der obere Wandabschnitt einen einteiligen und/oder einstückigen Korpus, wobei die weitere Fixierleiste auf die Oberfläche des hinteren Wandabschnitts aufgesetzt und/oder montiert. Hierzu kann die weitere Fixierleiste stoffschlüssig, vorzugsweise über eine Klebeverbindung, dauerhaft oder kraftschlüssig, vorzugsweise über das mindestens eine weitere Befestigungsmittel, lösbar an dem hinteren Wandabschnitt befestigt sein. Alternativ bilden der untere Wandabschnitt, der hintere Wandabschnitt und der obere Wandabschnitt einen zweiteiligen Korpus, wobei der Korpus an dem hinteren Wandabschnitt über die gesamte Breite in zwei Korpusteile geteilt ist, wobei die Fixierleiste als eine Verbindungsschiene ausgebildet ist, über welche die beiden Korpusteile formschlüssig und/oder kraftschlüssig und/oder stoffschlüssig, vorzugsweise im H-Profil, miteinander verbunden sind. Hierzu weist die Fixierleiste zwei Aufnahmeabschnitt auf, in welchem die beiden Korpusteile, insbesondere der jeweilige hintere Wandabschnitt, abschnittsweise aufgenommen ist. Bevorzugt wird nur der kritisch beanspruchte untere Teil des Staufachs, insbesondere der untere Korpusteil, mit der Innenlage ausgekleidet, wodurch eine geringere Vorspannung der Innenlage notwendig ist und zudem Gewicht aufgrund einer Flächeneinsparung eingespart werden kann.

In einer weiteren Ausgestaltung ist vorgesehen, dass die Staufachanordnung mindestens oder genau ein Kantenschutzprofil aufweist, welches zur seitlichen Anlage der Innenlage an einer der Seitenwände ausgebildet und/oder geeignet ist. Mit anderen Worten ist die Innenlage über das Kantenschutzprofil an einer der Seitenwände abgestützt. Das mindestens eine Kantenschutzprofil deckt hierbei eine Seitenkante der Innenlage über die gesamte Länge, vorzugsweise zwischen den beiden Fixierleisten, mindestens größtenteils ab. Insbesondere dient das Kantenschutzprofil zum Schutz und/oder Verstärkung der Seitenkanten der Innenlage. Insbesondere ist "mindestens größtenteils" dahingehend zu verstehen, dass das mindestens eine Kantenschutzprofil die Seitenkante über mehr als 80 %, vorzugsweise mehr als 90 %, im Speziellen mehr als 95 % der Länge der Innenlage abdeckt. Alternativ deckt das mindestens eine Kantenschutzprofil die Seitenkante vorzugsweise über die gesamte Länge der Innenlage ab. Optional ergänzend weist die Staufachanordnung ein weiteres Kantenschutzprofil zur seitlichen Anlage der Innenlage an der anderen Seitenwand auf, sodass die Innenlage beidseitig über jeweils ein Kantenschutzprofil an den beiden Seitenwänden abgestützt ist. Beispielsweise kann das mindestens eine Kantenschutzprofil als ein die Seitenkante umgreifendes Profil, insbesondere ein U-Profil, ausgebildet sein. Beispielsweise ist das Kantenschutzprofil hierzu seitlich auf die Seitenkante formschlüssig und/oder kraftschlüssig aufgesteckt. Alternativ kann das mindestens eine Kantenschutzprofil als ein einseitig anliegendes Profil, insbesondere ein L-Profil, ausgebildet sein. Beispielsweise ist das Kantenschutzprofil hierzu seitlich an der Seitenkante und/oder auf der Innenfläche stoffschlüssig gehalten. Durch die Kantenschutzprofile wird eine besonders einfache Montage der Innenlage ermöglicht, wobei die Innenlage, insbesondere bei einer flexiblen Ausgestaltung, durch die Kantenschutzprofile vor einer Beschädigung im Bereich der Seitenkanten geschützt wird.

In einer Konkretisierung ist vorgesehen, dass das Kantenschutzprofil aus einem elastischen Material gebildet ist und/oder einen an der Seitenwand anliegenden elastischen Materialabschnitt aufweist. Insbesondere ist das Kantenschutzprofil somit zumindest abschnittsweise elastisch verformbar ausgebildet, wobei die Innenlage unter elastischer Verformung des Kantenschutzprofils spielfrei zwischen den beiden Seitenwänden anordenbar und/oder angeordnet ist. Beispielsweise kann das Kantenschutzprofil bzw. der Materialabschnitt hierzu aus einem Elastomer, vorzugsweise Silikon oder Gummi, gebildet sein. Im Speziellen kann des Kantenschutzprofil einen starren Grundkörper aufweisen, wobei der elastische Materialabschnitt an den Grundkörper, z. B. mittels Spritzgießen, angespritzt ist. Aufgrund der elastischen Verformbarkeit des Kantenschutzprofils bzw. zumindest des elastischen Materialabschnitts kann durch das mindestens eine Kantenschutzprofil somit ein seitlicher Toleranzausgleich und/oder ein geschlossener Übergang bzw. eine Abdichtung der Innenlage gegenüber den Seitenwänden realisiert werden.

In einer weiteren Konkretisierung ist vorgesehen, dass das mindestens eine bzw. mindestens eines der Kantenschutzprofile eine Dichtlippe aufweist, welche über die gesamte Längserstreckung des Kantenschutzprofils an der zugewandten Seitenwand anliegt. Insbesondere bildet die Dichtlippe einen elastischen Überstand. Die Dichtlippe kann an der zugewandten Seitenwand, vorzugsweise unter elastischer Verformung, entlang der Längserstreckung spaltfrei und/oder ununterbrochen anliegen. Beispielsweise ist die Dichtlippe einstückig an dem Kantenschutzprofil oder dem elastischen Materialabschnitt angeformt. Alternativ kann der elastische Materialabschnitt jedoch auch durch die Dichtlippe gebildet sein. Insbesondere kann die Dichtlippe nur an einem der Kantenschutzprofile oder alternativ jedoch auch an beiden Kantenschutzprofilen ausgebildet sein. Durch die Dichtlippe wird somit eine dichtende Anlage des Kantenschutzprofils an der Seitenwand sichergestellt, wodurch der Eintrag von Fremdpartikeln, wie zum Beispiel Staub oder Schmutz, zwischen der Innenlage und dem abgedeckten Wandabschnitt verhindert wird. Zudem kann durch die Dichtlippe in einfacher Weise ein seitlicher Toleranzausgleich zwischen der Innenlage und dem Staufach ermöglicht werden.

In einer weiteren Ausführung ist vorgesehen, dass zumindest ein Teil der Innenlage durch ein an die Innenkontur des Staufachs vorgeformtes, starres Einlegeteil gebildet ist. Konkret bedeutet dies, dass die Innenlage zumindest abschnittsweise oder vollständig starr und/oder unflexibel ausgebildet ist. Insbesondere kann das starre Einlegeteil aus einem Faserverbundwerkstoff gebildet sein, welcher beispielsweise mittels Tiefziehen und/oder mittels Formteilpressen an die Innenkontur des Staufachs angepasst wird. Beispielweise können als Faserverbundwerkstoff, Prepregs, Organobleche oder -folien oder dergleichen verwendet werden. Im Speziellen kann das starre Einlegeteil aus einem thermoplastischen, faserverstärkten Organoblech oder einem duroplastischen Prepreg-Monolith gebildet sein. Das starre Einlegeteil kann gefärbt und/oder lackiert und/oder foliert sein. Der Vorteil des starren Einlegeteils besteht insbesondere darin, dass dieses gegenüber hohen Krafteinwirkungen im Wesentlichen formstabil bleibt und beim Einlegen in das Staufach keine Falten gebildet werden.

Alternativ oder optional ergänzend ist vorgesehen, dass zumindest ein Teil der Innenlage durch eine an die Innenkontur des Staufachs anlegbare, flexible Einlagebahn gebildet ist. Konkret bedeutet dies, dass die Innenlage zumindest abschnittsweise oder vollständig biegbar und/oder flexibel ausgebildet ist. Insbesondere kann die flexible Einlagebahn aus einem Faserverbundwerkstoff gebildet sein, welcher sich bei einer Einlage an die Innenkontur des Staufachs flächig anlegt bzw. anpasst. Beispielweise können als Faserverbundwerkstoff, Prepregs, Organobleche oder -folien oder dergleichen verwendet werden. Im Speziellen kann die flexible Einlagebahn aus einem thermoplastischen, faserverstärkten Organoblech oder einem duroplastischen Prepreg-Monolith gebildet sein. Vorzugsweise ist die flexible Einlagebahn durch eine Folie, Matte oder biegbare Platte gebildet. Beispielweise kann die Einlegebahn aus einem thermoplastischen Sheetware, eine Polycarbonat-Folie, eine Silikonmatte, oder einem einseitig, insbesondere zum Stauraum, verhauteten, thermoplastischen und/oder viskoelastischen Schaum gebildet sein. Das flexible Einlegeteil kann gefärbt und/oder lackiert und/oder foliert sein. Beispielsweise kann der an den unteren Wandabschnitt anliegende Teil der Innenlage durch das starre Einlegeteil und der an dem hinteren Wandabschnitt und/oder oberen Wandabschnitt anliegende Teil der Innenlage durch die flexible Einlegebahn gebildet sein. Der Vorteil der flexiblen Einlegebahn besteht insbesondere darin, dass beim Einlegen eine Anlage der Innenlage an den jeweiligen Wandabschnitten sichergestellt ist und zudem besonders einfach und kostengünstig herstellbar ist.

In einer weiteren konkreten Realisierung ist vorgesehen, dass die Innenlage zwei- oder mehrschichtig aufgebaut ist, wobei die Innenlage zumindest eine die Innenfläche bildende Dekorschicht und eine an dem jeweiligen Wandabschnitt anliegende Dämpfungsschicht aufweist. Insbesondere dient die Dekorschicht zur Bildung einer sichtbaren Dekorfläche als Innenfläche, welche zur optischen Aufwertung des Erscheinungsbildes dient. Beispielsweise kann die Dekorschicht hierzu eine kundenspezifische Farbgebung und/oder Bedruckung, zum Beispiel ein Airline-Branding, und/oder Information für das Bordpersonal und/oder Passagiere, zum Beispiel Sitzplatz- und/oder Sitzreihennummer, aufweisen. Die Dekorschicht kann durch eine Dekorfolie, vorzugsweise eine Tedlarfolie, gebildet sein. Insbesondere dient die Dämpfungsschicht zur Dämpfung von Stoßbelastungen auf die Innenlage, welche insbesondere beim Be- und Entladen des Stauguts auf die Innenlage einwirken. Weiterhin kann die Dämpfungsschicht zur Verbesserung der akustischen Eigenschaften des Staufachs und/oder zum Ausgleich von Oberflächenunebenheiten dienen. Beispielsweise kann die Dämpfungsschicht durch eine Elastomerschicht, z. B. ein dünner elastischer Weichschaum, oder eine Textilschicht, z. B. ein Vliesstoff, oder eine Beflockung ausgebildet sein.

Ein weiterer Gegenstand der Erfindung betrifft einen Wechselsatz mit der Staufachanordnung, wie diese bereits zuvor beschrieben wurde, wobei deren Innenlage eine erste Innenlage ist. Weiterhin weist der Wechselsatz mindestens oder genau eine zweite Innenlage auf, welche baugleich zu der ersten Innenlage ist, wobei in einem ersten Montagezustand die erste Innenlage zur Bildung der sichtbaren Innenfläche in dem Staufach angeordnet ist und in einem zweiten Montagezustand die zweite Innenlage zur Bildung der sichtbaren Innenfläche in dem Staufach anstelle der ersten Innenlage angeordnet ist. Insbesondere ist hierzu in dem zweiten Montagezustand die erste Innenlage entfernt. Vorzugsweise bedeutet baugleich, dass die erste Innenlage und die zweite Innenlage hinsichtlich ihrer geometrischen Abmessungen, insbesondere bezüglich Breite und Länge, identisch sind, sodass diese in dem jeweiligen Montagezustand über die mindestens eine Fixierleiste in dem Staufach fixierbar sind. Prinzipiell können die erste und die zweite Innenlage hinsichtlich des optischen Erscheinungsbildes identisch ausgebildet sein, also insbesondere die gleiche Dekorschicht aufweisen. Alternativ können die erste und die zweite Innenlage hinsichtlich ihres optischen Erscheinungsbildes und/oder Material und/oder Aufbau jedoch auch unterschiedlich ausgebildet sein, also insbesondere eine unterschiedliche Dekorschicht und/oder unterschiedliche Materialien und/oder unterschiedliche Schichten aufweisen. Im Speziellen kann der Wechselsatz mehr als zwei der baugleichen Innenlagen umfassen.

Ein optionaler Gegenstand der Erfindung betrifft ein Verfahren zum Austausch einer Innenlage des Wechselsatzes, bei dem die erste Innenlage zur Bildung der sichtbaren Innenfläche in dem Staufach angeordnet ist, wobei die erste Innenlage entfernt wird und die zweite Innenlage zur Bildung der sichtbaren Innenfläche in dem Staufach anstelle der ersten Innenlage angeordnet wird. Hierzu kann zumindest eine der Fixierleiste gelöst und/oder entfernt werden, sodass die erste Innenlage ungehindert aus dem Staufach entnommen werden kann. Zur Montage der ersten bzw. zweiten Innenlage wird diese in dem Staufach lagerichtig positioniert und anschließend über die mindestens eine Fixierleiste an dem unteren Wandabschnitt fixiert. Besonders bevorzugt sind die Innenlagen jedoch zusätzlich durch die weitere Fixierleiste fixierbar. Zur Montage der ersten bzw. zweiten Innenlage wird diese in dem Staufach über die weitere Fixierleiste lagerichtig positioniert und anschließend über die mindestens eine Fixierleiste an dem unteren Wandabschnitt fixiert. Hierzu kann die erste bzw. zweite Innenlage zunächst mit dem weiteren Endabschnitt in die weitere Fixierleiste eingeschoben werden und anschließend der Endabschnitt durch die Fixierleiste an dem unteren Wandabschnitt fixiert werden. Es wird somit ein besonders einfacher Austausch der Innenlage ermöglicht.

Ein weiterer Gegenstand der Erfindung betrifft ein Verfahren zum Nachrüsten eines Staufachs mit einer Innenlage zur Bildung der Staufachanordnung, wie diese bereits zuvor beschrieben wurde, wobei zunächst das Staufach bereitgestellt wird und anschließend die Innenlage zur Bildung der sichtbaren Innenfläche in dem Staufach angeordnet wird und lösbar befestigt wird. Insbesondere wird das Staufach mit einer Standard-Profilleiste bereitgestellt, welche über ein oder mehrere Standard-Befestigungsschnittstellen an der Vorderseite des unteren Wandabschnittes zur Bildung der Beladekante angeordnet ist, wobei die Standard-Profilleiste im Rahmen des Nachrüstprozesses mit der Fixierleiste erweitert wird oder durch eine Nachrüst-Profilleiste mit einer integrierten Fixierleiste ersetzt wird. Insbesondere ist unter einer Standard-Profilleiste eine standardmäßig und/oder werkseitig verbaute Profilleiste, vorzugsweise eine sogenannte "Bin Lip", zu verstehen. Hierbei kann die Fixierleiste über die Standard-Befestigungsschnittstellen an der Standard-Profilleiste befestigt werden. Alternativ kann die Standard-Profilleiste gegen die Nachrüst-Profilleiste ausgetauscht werden, wobei die Nachrüst-Profilleiste über die Standard-Befestigungsschnittstellen an dem unteren Wandabschnitt befestigt wird. Optional kann die weitere Fixierleiste im Rahmen des Nachrüstprozesses an dem hinteren Wandabschnitt befestigt werden. Alternativ kann das Staufach jedoch auch vor dem Nachrüstprozess, insbesondere ab Werk, bereits mit der zusätzlichen Fixierleiste oder der Profilleiste mit integrierter Fixierleiste und/oder der weiteren Fixierleiste bereitgestellt werden. Mit anderen Worten ist das Staufach bereits für ein nachträgliches Nachrüsten der Innenlage (Refurbishment) vorbereitet. Insbesondere kann die Innenlage bei der Herstellung des Staufachs bzw. ab Werk oder bei einer Montage des Staufachs in dem Flugzeug oder nach einem begrenzten Nutzungszeitraum des Staufachs in dem Flugzeug mit der Innenlage ausgestattet oder nachgerüstet werden. Es wird somit eine Staufachanordnung vorgeschlagen, bei welcher die Verwendung von bereits im Staufach bestehenden Anbindungspunkten und/oder Komponenten zur Befestigung der Innenlage in einfacher Weise genutzt werden können. Somit können bereits verbaute und/oder abgenutzte Staufächer in einfacher Weise mit der Fixierleiste und gegebenenfalls der weiteren Fixierleiste sowie der Innenlage nachgerüstet werden, wobei hierzu insbesondere die bestehende Profilleiste und/oder die bestehenden Befestigungsmittel genutzt werden können. Weiterhin ergibt sich die Möglichkeit, das Staufach bei einer Neukonstruktion so zu gestalten, so dass ein nachträgliches Nachrüsten der Innenlage (Refurbishment) bereits vorbereitet ist, also das Staufach bereits mit der Fixierleiste und/oder der weiteren Fixierleiste ausgestattet ist. Die Erstauslieferung kann somit ohne dem durch die Innenlage entstehenden Zusatzgewicht erfolgen, wobei die Innenlage dann nach Bedarf bestellt und eingesetzt werden kann.

Ein weiterer Gegenstand der Erfindung betrifft ein Flugzeug, insbesondere ein Passagierflugzeug, mit der Staufachanordnung, wie diese bereits zuvor beschrieben wurde und/oder mit dem Wechselsatz, wie dieser bereits zuvor beschrieben wurde. Vorzugsweise ist die Staufachanordnung hierzu in dem Überkopfbereich der Passagierkabine angeordnet ist und dient zur Aufnahme von Handgepäck.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
- Figur 1: eine perspektivische Darstellung einer Staufachanordnung für ein Flugzeug als ein Ausführungsbeispiel der Erfindung;
- Figur 2: eine Detailansicht der Staufachanordnung aus Figur 1 mit einer Profilschiene mit einer separaten Fixierleiste;
- Figur 3: eine Detailansicht der Profilschiene in einer alternativen Ausführung mit einer integrierten Fixierleiste;
- Figur 4: eine Detailansicht der Staufachanordnung aus Figur 1 mit einer weiteren Fixierleiste für einen einteiligen Korpus der Staufachanordnung;
- Figur 5: eine Detailansicht der weiteren Fixierleiste in einer alternativen Ausführung für einen zweiteiligen Korpus der Staufachanordnung;
- Figur 6: eine alternative Ausführung der Staufachanordnung in einer perspektivischen Schnittdarstellung;
- Figur 7: eine Detailansicht der Staufachanordnung aus Figur 6 mit einer als Kantenabschlussprofil ausgebildeten weiteren Fixierleiste in einer weiteren alternativen Ausführung;
- Figur 8: eine stark schematisierten Schnittdarstellung einer wechselbaren Innenlage für die Staufachanordnung;
- Figur 9: eine Detailansicht einer rechten Seitenkante der Innenlage mit einem rechten Kantenschutzprofil;
- Figur 10: eine Detailansicht einer linken Seitenkante der Innenlage mit einem linken Kantenschutzprofil.

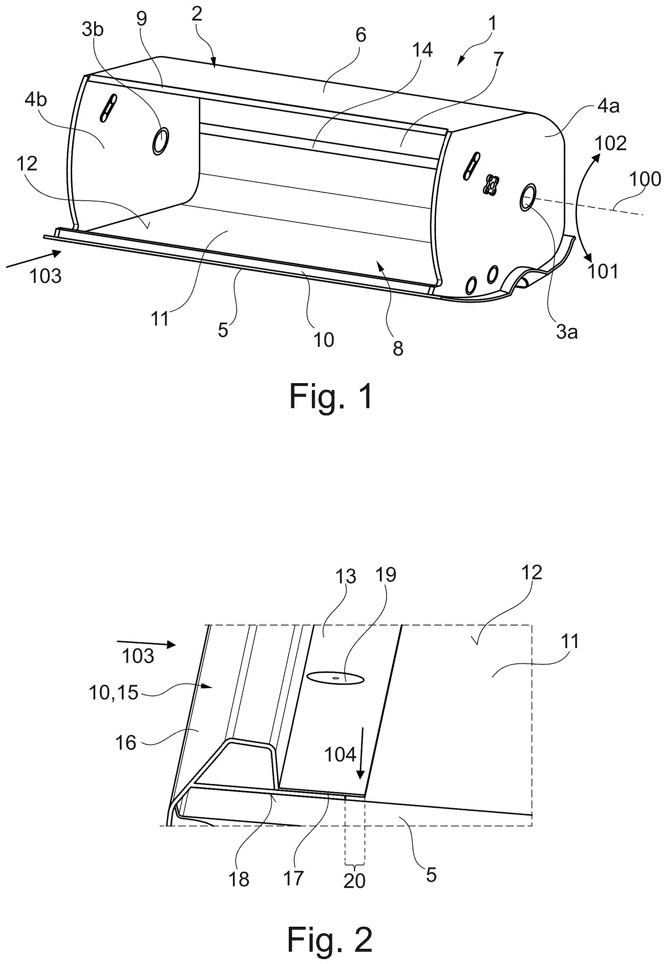

Die Figur 1 zeigt eine Staufachanordnung 1, welche zur Anordnung in einem, nicht dargestellt, Überkopfbereich einer Passagierkabine eines Passagierflugzeugs dient. Die Staufachanordnung 1 weist ein Staufach 2 auf, welches über zwei mechanische Schnittstellen 3a, 3b um eine Schwenkachse 100 beispielsweise in einem an einer Flugzeugstruktur des Flugzeugs montierbaren Staufachgehäuse, nicht dargestellt, zwischen einer Offenstellung 101 und einer Schließstellung 102 schwenkbar gelagert ist. Das Staufach 2 ist somit als eine Schütte ausgebildet und dient zur Aufnahme von Staugut, wie z.B. Handgepäckstücke.

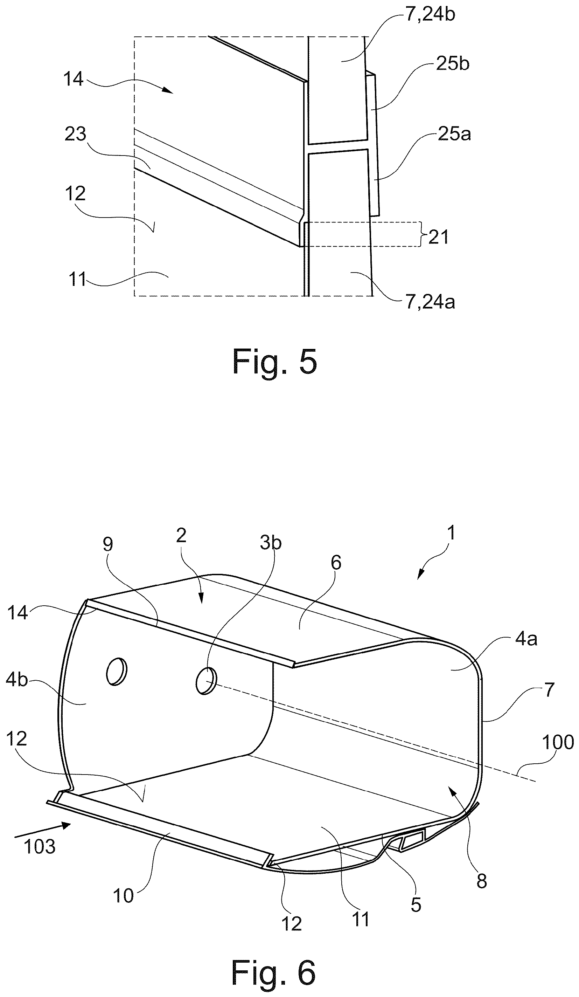

Das Staufach 2 weist zwei seitliche Wandabschnitte 4a, 4b, einen unteren Wandabschnitt 5, einen oberen Wandabschnitt 6 und einen hinteren Wandabschnitt 7 auf, welche gemeinsam einen Stauraum 8 begrenzen. Hierbei umschließen der untere Wandabschnitt 5, der obere Wandabschnitt 6 sowie die beiden seitlichen Wandabschnitte 4a, 4b zusammen eine Aufnahmeöffnung 9, über welche der Stauraum 8 zum Be- und Entladen des Staugutes in der Offenstellung 101 zugänglich ist. Die mechanischen Schnittstellen 3a, 3b sind an den Seitenwänden 4a, 4b angeordnet. Der untere Wandabschnitt 5, der obere Wandabschnitt 6 und der hintere Wandabschnitt 7 bilden gemeinsam einen U-förmigen Korpus, welcher einteilig, wie z. B. in den Figuren 1 und 6 dargestellt, oder zweiteilig, wie z. B. in Figur 5 dargestellt, ausgebildet sein kann. Beispielsweise sind die Wandabschnitte 4a, 4b, 5, 6, 7 als Sandwichbauteile ausgebildet.

Das Staufach 2 weist an einer Vorderseite 103 des unteren Wandabschnittes 5 eine Beladekante 10 auf, welche sich über die gesamte Breite des unteren Wandabschnittes 5 zwischen den beiden seitlichen Wandabschnitten 4a, 4b erstreckt. Die Beladekante 10 dient hierbei zur Sicherung des Stauguts in der Offenstellung 101 des Staufachs 2 und als Handgriff zum Öffnen oder Schließen des Staufachs 2.

Weiterhin weist die Staufachanordnung 1 eine wechselbare Innenlage 11 auf, welche eine sichtbare Innenfläche 12 des Staufachs 2 in der Offenstellung 101 bildet, wobei die Innenlage 11 den unteren Wandabschnitt 5 über die gesamte Länge vollständig und den hinteren Wandabschnitt 7 über die gesamte Länge abschnittsweise abdeckt. Weiterhin deckt die Innenlage 11 den unteren Wandabschnitt 5 und den hinteren Wandabschnitt 5 über die gesamte Breite vollständig oder zumindest annähernd vollständig, z. B. zu mehr als 95%, ab. Die Innenlage 11 liegt hierbei flächig an dem unteren Wandabschnitt 5 und dem hinteren Wandabschnitt 7 an.

Die Innenlage 11 ist über eine Fixierleiste 13, wie in Figur 2 dargestellt, und eine weitere Fixierleiste 14 lösbar in dem Stauraum 8 befestigt. Die Innenlage 11 ist beispielsweise als ein mit Tedlar dekorierter Prepreg-Monolith ausgebildet. Die Innenlage 11 ist hierbei durch eine andere Innenlage eines Wechselsatzes, nicht dargestellt, austauschbar. Durch die wechselbare Innenlage 11 kann das optische Erscheinungsbild des Stauraums 8 nach Bedarf vergleichsweise kostengünstig erneuert werden, indem beispielsweise die abgenutzte Innenlage 11 gegen eine neue, unbenutzte Innenlage ausgetauscht wird. Zudem wird durch die separate Innenlage die Oberfläche der abgedeckten Wandabschnitte, insbesondere des unteren Wandabschnittes 5 und des hinteren Wandabschnitts 7 dauerhaft vor Beschädigungen geschützt.

Figur 2 zeigt eine Detailansicht der Staufachanordnung 1 aus Figur 1, wobei zu erkennen ist, dass die Beladekante 10 durch eine Profilschiene 15 gebildet ist, welche an der Vorderseite 103 an dem unteren Wandabschnitt 5 aufgesetzt ist. Die Profilschiene 15 weist hierbei einen die Beladekante 10 bildenden Profilabschnitt 16 mit einem trapezförmigen Querschnitt auf. Weiterhin weist die Profilschiene 15 einen an den Profilsabschnitt 16 anschließenden und nach innen in den Stauraum 8 gerichteten Anlageabschnitt 17 mit einem flachen und/oder ebenen Profil auf.

Der Anlageabschnitt 17 erstreckt sich hierbei entlang der Beladekante 10 über die gesamte Baulänge der Profilschiene 15. Beispielsweise weist die Profilschiene 15 ein Strangpressprofil auf, wobei der Profilabschnitt 16 und der Anlageabschnitt 17 über die gesamte Baulänge ein konstantes Querschnittsprofil aufweisen. Der Profilabschnitt 15 und der Anlageabschnitt 16 definieren eine ebene Anlagefläche 18 über welche die Profilschiene 14 flächig an dem unteren Wandabschnitt 5 anliegt.

Weiterhin ist der Figur 2 zu entnehmen, dass die Fixierleiste 13 an dem Anlageabschnitt 17 aufgesetzt ist und über mindestens ein Befestigungsmittel 19 der Profilschiene 15 an dem Anlageabschnitt 17 befestigt ist. Das Befestigungsmittel 19 kann beispielsweise als eine Befestigungsschraube ausgebildet sein, welche in den unteren Wandabschnitt 5, z.B. über ein in dem unteren Wandabschnitt 5 eingebrachtes Insert, eingeschraubt ist. Die Fixierleiste 13 weist ein Flachprofil auf und liegt somit eben an dem Anlageabschnitt 17 an.

Zur Fixierung der Innenlage 11 ist die Fixierleiste 13 als eine Klemmleiste ausgebildet, welche einen Überstand zu dem Anlageabschnitt 17 bildet, durch welchen ein Endabschnitt 20 der Innenlage 11 an dem unteren Wandabschnitt 5 fixiert ist. Hierbei kann der Endabschnitt 20 einerseits an dem Anlageabschnitt 17 anliegen und zugleich von oben mit einer Klemmkraft 104 beaufschlagt sein, um den Endabschnitt 20 zwischen der Fixierleiste 13 und dem unteren Wandabschnitt 5 klemmend zu fixieren. Die Klemmkraft 104 kann hierbei durch ein Anzugsmoment des als Befestigungsschraube ausgebildeten Befestigungsmittels 19 eingestellt werden.

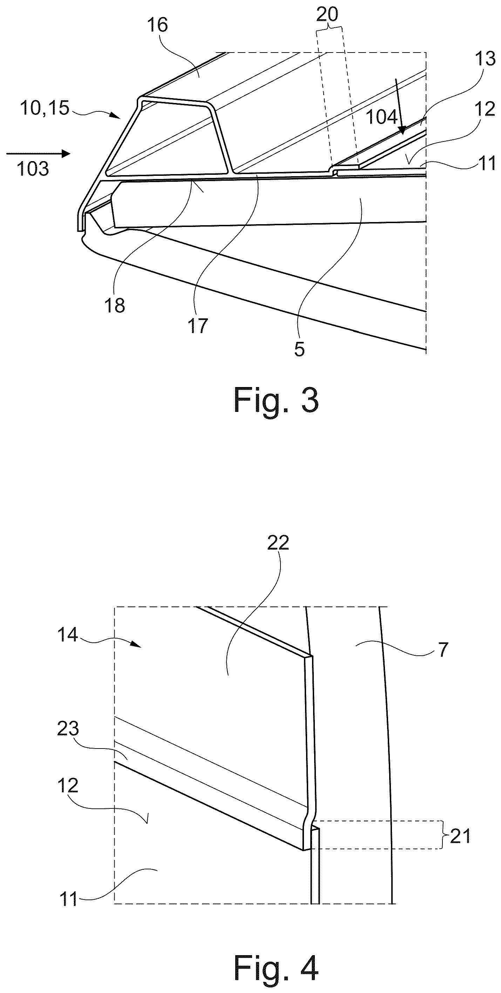

Figur 3 zeigt eine alternative Ausführung der Profilschiene 15 in einer Detailansicht, wobei zu erkennen ist, dass die Fixierleiste 13 an dem Auflageabschnitt 17 integriert ist. Zur Fixierung der Innenlage 11 bildet die Fixierleiste 13 ein Klemmprofil, durch welches der Endabschnitt 20 der Innenlage 11 an dem unteren Wandabschnitt 5 fixiert ist. Hierbei kann der Endabschnitt 20 einerseits an dem Anlageabschnitt 17 anliegen und zugleich von oben mit der Klemmkraft 104 beaufschlagt sein, um den Endabschnitt 20 zwischen der Fixierleiste 13 und dem unteren Wandabschnitt 5 klemmend zu fixieren.

Figur 4 zeigt eine weitere Detailansicht der Staufachanordnung 1 aus Figur 1, wobei zu erkennen ist, dass die weitere Fixierleiste 14 an dem hinteren Wandabschnitt 7 aufgesetzt ist. Die weitere Fixierleiste 14 kann stoffschlüssig, zum Beispiel über eine Klebeberbindung, oder kraftschlüssig, zum Beispiel über ein weiteres Befestigungsmittel, nicht dargestellt, an dem hinteren Wandabschnitt 7 befestigt sein. Die weitere Fixierleiste 14 weist hierzu einen ebenen Befestigungsabschnitt 22 auf, über welchen die weitere Fixierleiste 14 an dem hinteren Wandabschnitt 7 anliegt und befestigt ist.

Zur Fixierung der Innenlage 11 umfasst die weitere Fixierleiste 14 einen an den Befestigungsabschnitt 22 angeformten Fixierungsabschnitt 23, durch welchen ein weiterer Endabschnitt 21 der Innenlage 11 an dem hinteren Wandabschnitt 7 fixiert ist. Hierbei kann der weitere Endabschnitt 21 zwischen dem Fixierungsabschnitt 23 und dem hinteren Wandabschnitt 7 zumindest formschlüssig aufgenommen sein.

Bei einer Montage der Innenlage 11 kann je nach Ausgestaltung der Profilschiene 15 entweder die Fixierleiste 13 und/oder die Profilschiene 15 zunächst durch Lockern der Befestigungsmittel 19 gelöst werden, wobei der weitere Endabschnitt 21 zwischen dem Fixierungsabschnitt 23 und dem hinteren Wandabschnitt 7 eingeschoben wird und anschließend die Profilschiene 15 bzw. die Fixierleiste 13 durch Anziehen der Befestigungsmittel 19 fixiert wird und der Endabschnitt 20 über die Fixierleiste 13 an dem unteren Wandabschnitt 5, insbesondere durch Aufbringen der Klemmkraft 104, fixiert wird. Somit kann die Innenlage 11 durch die beiden Fixierleisten 13, 14 besonders einfach in dem Staufach 2 positioniert und fixiert werden.

Figur 5 zeigt eine alternative Ausführung der Staufachanordnung 1 in einer Detailansicht, wobei der hintere Wandabschnitt 7 zur Bildung eines unteren und eines oberen Korpusteils 24a, 24b zweigeteilt ist. Die weitere Fixierleiste 14 weist hierbei einen unteren Aufnahmeabschnitt 25a zur Aufnahme des unteren Korpusteils 24a und einen oberen Aufnahmeabschnitt 25b zur Aufnahme des oberen Korpusteils 24b auf, wobei die weitere Fixierleiste 14 somit zwischen den beiden Korpusteilen 24a, 24b formschlüssig aufgenommen ist.

Zur Fixierung der Innenlage 11 ist der Fixierungsabschnitt 23 an den unteren Aufnahmeabschnitt 25a angeformt, durch welchen der weitere Endabschnitt 21 der Innenlage 11 an dem hinteren Wandabschnitt 7 fixiert ist. Hierbei kann der weitere Endabschnitt 21 zwischen dem Fixierungsabschnitt 23 und dem hinteren Wandabschnitt 7 des unteren Korpusteils 24a zumindest formschlüssig aufgenommen sein.

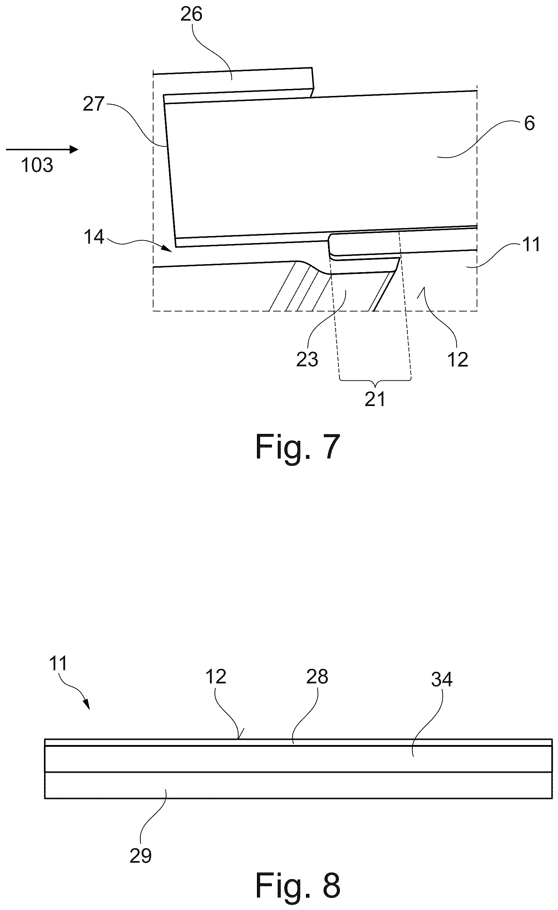

Figur 6 zeigt eine alternative Ausführung der Staufachanordnung 1 in einer Schnittdarstellung, wobei die Innenlage 11 den unteren Wandabschnitt 5, den hinteren Wandabschnitt 7 und den oberen Wandabschnitt 6 vollständig oder zumindest annähernd vollständig abdeckt. Mit anderen Worten ist die Oberfläche des gesamten Stauraum 8 bis auf die beiden Seitenwände 4a, 4b durch die Innenlage 11 bedeckt. Die Innenlage 11 liegt hierbei flächig an dem unteren Wandabschnitt 5, dem oberen Wandabschnitt 6 und dem hinteren Wandabschnitt 7 an. Die Innenlage 11 ist hierbei an dem unteren Wandabschnitt 5 über die Fixierleiste 13, wie in Figur 2 oder 3 dargestellt, und über die weitere Fixierleiste 14 an dem oberen Wandabschnitt 6, wie in Figur 7 dargestellt, lösbar in dem Stauraum 8 befestigt.

Figur 7 zeigt in einer Detailansicht die weitere Fixierleiste 14 für die Staufachanordnung 1 aus Figur 6, wobei die weitere Fixierleiste 14 an einer Vorderkante 27 des oberen Wandabschnitts 6 angeordnet ist. Hierzu weist die Fixierleiste 14 einen Aufnahmeabschnitt 26 zur Aufnahme des oberen Wandabschnitts 6 auf, wobei die weitere Fixierleiste 14 somit an der Vorderseite 103 auf den vorderen Wandabschnitt 6 aufgeschoben ist und zumindest formschlüssig an diesem festgelegt ist. Beispielsweise kann die weitere Fixierleiste 14 zusätzlich mit dem weiteren Wandabschnitt 6 verklebt oder verschraubt sein.

Zur Fixierung der Innenlage 11 ist der Fixierungsabschnitt 23 an den Aufnahmeabschnitt 26 angeformt, durch welchen der weitere Endabschnitt 21 der Innenlage 11 an dem oberen Wandabschnitt 6 fixiert ist. Hierbei kann der weitere Endabschnitt 21 zwischen dem Fixierungsabschnitt 23 und dem oberen Wandabschnitt 6 zumindest formschlüssig aufgenommen sein.

Figur 8 zeigt einen schematischen Querschnitt der Innenlage 11, wobei die Innenlage 11 in dem gezeigten Ausführungsbeispiel dreischichtig aufgebaut ist und eine die Innenfläche 12 bildende Dekorschicht 28, eine an dem jeweiligen Wandabschnitt 4 anliegende Dämpfungsschicht 29 sowie eine zwischen der Dekorschicht 28 und der Dämpfungsschicht 29 angeordnete Trägerschicht 34 aufweist.

Die Innenlage 11 ist durch ein an die Innenkontur des Staufachs 2 anlegbare, flexible Einlegebahn gebildet. Hierzu sind die Dekorschicht 28, die Trägerschicht 34 und die Dämpfungsschicht 29 flexibel ausgestaltet. Hierbei kann die Dekorschicht 28 beispielsweise als eine Dekorfolie, z. B. eine Tedlarfolie, und die Trägerschicht 34 als ein Strukturbauteil, z. B. ein Duroplastischer Prepreg-Monolith, ausgebildet sein. Beispielsweise kann die Trägerschicht 34 jedoch auch aus einem thermoplastischen, faserverstärkten Organoblech oder dergleichen gebildet sein. Alternativ kann die Innenlage 11 durch eine an die Innenkontur des Staufachs 2 vorgeformte, starre Einlegebahn gebildet sein.

Die durch die Dekorschicht 28 gebildete Innenfläche 12 kann eine kundenspezifische Farbgebung, bevorzugt weiß, eine kundenspezifische Bedruckung, z. B. Airline Branding, und/oder eine kundenspezifische Information, wie z. B. Sitzreihennummer von der Beladekante 10 aufweisen.

Die Dämpfungsschicht 29 dient zur Dämpfung von Stoßbelastungen und/oder einem Körperschall beim Be- und Entladen des Staugutes und kann zudem Oberflächentoleranzen ausgleichen. Hierzu kann die Dämpfungsschicht 29 durch eine(n) an der Unterseite der Dekorschicht 28 angeordneten dünnen, elastischen Schaum, dünnen Vliesstoff oder Beflockung gebildet sein.

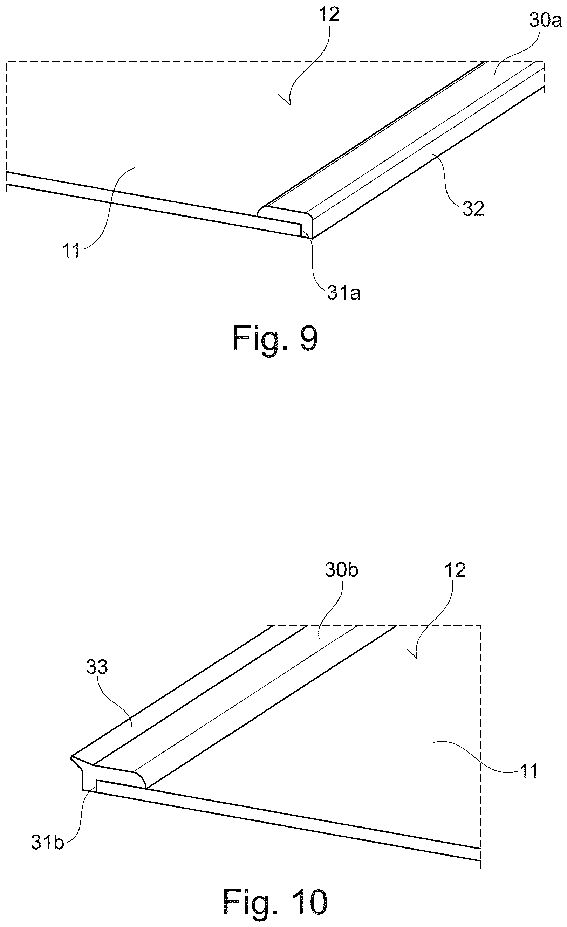

Die Figuren 9 und 10 zeigen jeweils eine Detailansicht der Innenlage 11 mit jeweils einem Kantenschutzprofil 30a, 30b zur seitlichen Anlage der Innenlage 11 an einer der Seitenwände 4a, 4b. In der gezeigten Ausführung ist die Innenlage 11 monolithisch bzw. einmaterialig bzw. einschichtig ausgebildet.

Die beiden Kantenschutzprofil 30a, 30b sind jeweils L-förmig ausgebildet und liegen hierbei einerseits an der Innenfläche 12 und andererseits an einer Seitenkante 31a, 31b der Innenlage 11 an. Beispielsweise sind die Kantenschutzprofile 30a, 30b auf der Innenfläche 12 und/oder der Seitenkante 31a, 31b aufgeklebt.

Die Kantenschutzprofile 30a, 30b können aus einem elastischen Material, z. B. Silikon, gefertigt sein und sind somit elastisch verformbar ausgebildet sein, um einen seitlichen Toleranzausgleich, eine Abdichtung und einen spaltfreien Übergang zu den beiden Seitenwänden 4a, 4b zu gewährleisten. Hierzu kann eine Breite der Innenlage 11 mit den beiden Kantenschutzprofilen 30a, 30b ein Übermaß gegenüber einer Breite des Stauraums 8 zwischen den beiden Seitenwänden 4a, 4b aufweisen, so dass die Innenlage 11 unter elastischer Verformung des rechten und/oder linken Kantenschutzprofils 30a, 30b spielfrei zwischen den beiden Seitenwänden 4a, 4b anordenbar ist.

Hierzu ist die in Figur 9 gezeigte rechte Seitenkante 30a über das rechte Kantenschutzprofil 30a unmittelbar an der rechten Seitenwand 4a, wie z. B. in Figur 1 gezeigt, abstützbar, wobei das rechte Kantenschutzprofil 30a über seine gesamte Längserstreckung an der rechten Seitenwand 4a mit einer Dichtfläche 32 flächig anliegt.

Die in Figur 10 gezeigte linke Seitenkante 30b ist hingegen über das linke Kantenschutzprofil 30b unmittelbar an der linken Seitenwand 4b, wie z. B. in Figur 1 gezeigt, abstützbar, wobei das linke Kantenschutzprofil 30b hierzu eine über seine gesamte Längserstreckung ersteckende Dichtlippe 33 aufweist, über welche das linke Kantenschutzprofil 30b an der linken Seitenwand 4b anliegt. Durch die Dichtlippe 33 wird ein elastischer Überstand gebildet, wodurch seitliche Toleranzen besonders gut ausgeglichen werden können. Prinzipiell ist es auch denkbar, dass beide Kantenschutzprofile 30a, 30b eine derartige Dichtlippe 33 aufweisen.

Alternativ hierzu könnte auch nachträglich, insbesondere nach dem Einbau der Innenlage 11, anstelle der Kantenschutzprofile 30a, 30b eine Silikonfuge händisch aufgebracht werden, welche jedoch beim Austausch der Innenlage 11 entfernt bzw. abgerissen werden muss und verbleibende Silikonreste entfernt werden müssen.

### Bezugszeichenliste

- 1: Staufachanordnung
- 2: Staufach
- 3a, b: mechanische Schnittstellen
- 4a, b: Seitenwände
- 5: unterer Wandabschnitt
- 6: oberer Wandabschnitt
- 7: hinterer Wandabschnitt
- 8: Stauraum
- 9: Aufnahmeöffnung
- 10: Beladekante
- 11: Innenlage
- 12: Innenfläche
- 13: Fixierleiste
- 14: weitere Fixierleiste
- 15: Profilschiene
- 16: Profilabschnitt
- 17: Anlageabschnitt
- 18: Anlagefläche
- 19: Befestigungsmittel
- 20: Endabschnitt
- 21: weiterer Endabschnitt
- 22: Befestigungsabschnitt
- 23: Fixierungsabschnitt
- 24a, b: Korpusteile
- 25a, b: Aufnahmeabschnitte
- 26: Aufnahmeabschnitt
- 27: Vorderkante
- 28: Dekorschicht
- 29: Dämpfungsschicht
- 30a, b: Kantenschutzprofile
- 31a, b: Seitenkanten
- 32: Dichtfläche
- 33: Dichtlippe
- 34: Trägerschicht
- 100: Schwenkachse
- 101: Offenstellung
- 102: Schließstellung
- 103: Vorderseite
- 104: Klemmkraft

## Patentansprüche

1. Staufachanordnung (1) für ein Flugzeug,
mit einem Staufach (2) zur Aufnahme von Staugut, welches in einer bestimmungsgemäßen Einbaulage über mindestens eine mechanische Schnittstelle (3a, 3b) zumindest mittelbar an einer Flugzeugstruktur befestigbar ist, wobei das Staufach (2) zwei seitliche Wandabschnitte (4a, 4b) zur seitlichen Begrenzung des Staufachs (2), einen unteren Wandabschnitt (5) zur unteren Begrenzung des Staufachs (2), einen oberen Wandabschnitt (6) zur oberen Begrenzung des Staufachs (2) sowie einen hinteren Wandabschnitt (7) zur rückseitigen Begrenzung des Staufachs (2) aufweist, wobei zumindest der untere, der obere sowie die seitlichen Wandabschnitte (4a, 4b, 5, 6) zusammen eine Aufnahmeöffnung (9) für das Staugut umschließen,
**gekennzeichnet durch**
eine wechselbare Innenlage (11) zur Bildung einer sichtbaren Innenfläche (12) des Staufachs (2), wobei die Innenlage (11) zumindest den unteren Wandabschnitt (5) mindestens größtenteils abdeckt und lösbar in dem Staufach (2) befestigt ist.

2. Staufachanordnung (1) nach Anspruch 1, **dadurch gekennzeichnet, dass** die Innenlage (11) zusätzlich den hinteren Wandabschnitt (7) und/oder den oberen Wandabschnitt (6) zumindest abschnittsweise abdeckt.

3. Staufachanordnung (1) nach Anspruch 1 oder 2, **gekennzeichnet durch** mindestens eine Fixierleiste (13) zur Befestigung der Innenlage (11) in dem Staufach (2), wobei die mindestens eine Fixierleiste (13) einen Endabschnitt (20) der Innenlage (11) über die gesamte Breite der Innenlage (11) mindestens größtenteils fixiert.

4. Staufachanordnung (1) nach Anspruch 3, **dadurch gekennzeichnet, dass** das Staufach (2) an einer Vorderseite (103) des unteren Wandabschnittes (5) eine Beladekante (10) aufweist, wobei die mindestens eine Fixierleiste (13) an der Beladekante (10) angeordnet ist, um den Endabschnitt (20) an dem unteren Wandabschnitt (5) zu fixieren.

5. Staufachanordnung (1) nach Anspruch 4, **dadurch gekennzeichnet, dass** die Beladekante (10) durch eine an dem unteren Wandabschnitt (5) aufgesetzte Profilschiene (15) gebildet ist, wobei die Profilschiene (15) einen nach innen gerichteten und an dem unteren Wandabschnitt (5) anliegenden Anlageabschnitt (17) aufweist, an welchem die Fixierleiste (13) integriert oder aufgesetzt ist.

6. Staufachanordnung (1) nach einem der Ansprüche 3 bis 5, **gekennzeichnet durch** eine weitere Fixierleiste (14) zur Befestigung der Innenlage (11) in dem Staufach (2), wobei die weitere Fixierleiste (14) einen dem Endabschnitt (20) gegenüberliegenden weiteren Endabschnitt (21) der Innenlage (11) über die gesamte Breite der Innenlage (11) mindestens größtenteils fixiert.

7. Staufachanordnung (1) nach Anspruch 6, **dadurch gekennzeichnet, dass** die weitere Fixierleiste (14) wahlweise an einer Vorderkante (27) des oberen Wandabschnitts (6) angeordnet ist, um den weiteren Endabschnitt (21) an dem oberen Wandabschnitt (6) zu fixieren, oder an dem hinteren Wandabschnitt (7) angeordnet ist, um den weiteren Endabschnitt (21) an dem hinteren Wandabschnitt (7) zu fixieren.

8. Staufachanordnung (1) nach einem der vorhergehenden Ansprüche, **gekennzeichnet durch** mindestens ein Kantenschutzprofil (30a, 30b) zur seitlichen Anlage der Innenlage (11) an einer der Seitenwände (4a, 4b), wobei das mindestens eine Kantenschutzprofil (30a, 30b) eine Seitenkante (31a, 31b) der Innenlage (11) über die gesamte Länge der Innenlage (11) mindestens größtenteils abdeckt.

9. Staufachanordnung (1) nach Anspruch 8, **dadurch gekennzeichnet, dass** das mindestens eine Kantenschutzprofil (30a, 30b) aus einem elastischen Material gebildet ist und/oder einen an der Seitenwand (4a, 4b) anliegenden elastischen Materialabschnitt aufweist.

10. Staufachanordnung (1) nach Anspruch 8 oder 9, **dadurch gekennzeichnet, dass** das mindestens eine Kantenschutzprofil (30a, 30b) eine Dichtlippe (33) aufweist, welche über die gesamte Längserstreckung des Kantenschutzprofils (30a, 30b) an der zugewandten Seitenwand (4a, 4b) anliegt.

11. Staufachanordnung (1) nach einem der vorhergehenden Ansprüche, **dadurch gekennzeichnet, dass** zumindest ein Teil der Innenlage (11) durch ein an die Innenkontur des Staufachs (2) vorgeformtes, starres Einlegeteil gebildet ist und/oder zumindest ein Teil der Innenlage (11) durch eine an die Innenkontur des Staufachs (2) anlegbare, flexible Einlegebahn gebildet ist.

12. Staufachanordnung (1) nach einem der vorhergehenden Ansprüche, **dadurch gekennzeichnet, dass** die Innenlage (11) mindestens zweischichtig aufgebaut ist, wobei die Innenlage (11) eine die Innenfläche (12) bildende Dekorschicht (28) und eine zumindest an dem unteren Wandabschnitt (5) anliegende Dämpfungsschicht (29) aufweist.

13. Wechselsatz
- mit der Staufachanordnung (2) nach einem der vorhergehenden Ansprüche, deren Innenlage (11) eine erste Innenlage ist,
- und mit mindestens einer zweiten Innenlage, welche baugleich zu der ersten Innenlage ist,
- wobei in einem ersten Montagezustand die erste Innenlage zur Bildung der sichtbaren Innenfläche (12) in dem Staufach (2) angeordnet ist und in einem zweiten Montagezustand die zweite Innenlage zur Bildung der sichtbaren Innenfläche (12) in dem Staufach (2) anstelle der ersten Innenlage angeordnet ist.

14. Verfahren zum Nachrüsten eines Staufachs (2) mit einer Innenlage (11) zur Bildung der Staufachanordnung (1) nach einem der Ansprüche 1 bis 12, bei dem:
- das Staufach (2) bereitgestellt wird;
- die Innenlage zur Bildung der sichtbaren Innenfläche (12) in dem Staufach (2) angeordnet und lösbar befestigt wird.

15. Flugzeug mit der Staufachanordnung (1) nach einem der Ansprüche 1 bis 12 und/oder mit dem Wechselsatz nach Anspruch 13.
